# EUROPEAN PATENT SPECIFICATION

(11) **EP 2 610 150 B1**
(45) Date of publication and mention of the grant of the patent: **03.12.2014**
(21) Application number: 12188331.8
(22) Date of filing: 12.10.2012
(51) Int. Cl.: B62J 6/02, B62J 17/02

(54) **Saddle-ride type vehicle**
Sattelfahrzeug
Véhicule à monture de selle

(30) Priority: 28.12.2011 JP 2011288299
(43) Date of publication of application: 03.07.2013
(73) Proprietor: Yamaha Hatsudoki Kabushiki Kaisha, Iwata-shi, Shizuoka 438-8501 (JP)
(72) Inventor: Shimomura, Tadashi, 10540 Samutprakarn (TH)
(74) Representative: Grünecker, Kinkeldey, Stockmair & Schwanhäusser

(56) References cited:
- EP-A1- 2 332 812
- EP-A2- 0 869 052
- WO-A1-2009/038052
- DE-A1- 4 212 258
- JP-A- 2011 148 453
- US-A- 3 866 971
- US-A- 4 709 774
- US-A1- 2004 188 156

## Description

The present invention relates to a saddle-ride type vehicle. A saddle-ride type vehicle according to the preamble of claim 1 is known from WO 2009/038052 A1.

Headlights greatly affect the visual appearance of saddle-ride type vehicles. In recent years, headlights installed on saddle-ride type vehicles have increased in size. In cases where a large headlight is attached to a front cover, the front cover is preferably strong enough to support the headlight. It is therefore desirable that the front cover be supported by a vehicle body frame. In the two-wheeled vehicle disclosed in Japanese Laid-open Patent Application JP-A-2011-31817, an attachment hole is formed in the front cover. The front cover is attached to a bracket extending from the vehicle body frame via the attachment hole.

In the two-wheeled vehicle disclosed in Japanese Laid-open Patent Application JP-A-2011-31817, the attachment hole is disposed in the center of the front cover with respect to the vehicle width direction. For this reason, the front cover is liable to vibrate due to bending in the left-right direction. Vibration in the front cover can be a factor in reducing the lifespan of the bulb of the headlight or causing noise.

An object of the present invention is to provide a saddle-ride type vehicle capable of suppressing front cover bending. Such an object is achieved by a saddle-ride type vehicle according to claim 1

A saddle-ride type vehicle according to the present invention comprises a vehicle body frame, a front portion, and a support stay. The vehicle body frame includes a head pipe. The front portion includes a headlight and a front cover. The front cover covers the front of the head pipe, and the headlight is attached to the front cover. The support stay includes a left securing portion, a right securing portion, and a frame securing portion, and supports the front portion. The left securing portion is disposed farther to the left than the left end of the head pipe, and is secured to the front cover. The right securing portion is disposed farther to the right than the right end of the head pipe, and is secured to the front cover. The frame securing portion is secured to the vehicle body frame.

In the saddle-ride type vehicle of the present invention, the headlight includes a light-emitting element and a reflector. The reflector reflects light emitted by the light-emitting element forward. The left securing portion is positioned farther to the left than a left end of the reflector. The right securing portion is positioned farther to a right than the right end of the reflector.

In a saddle-ride type vehicle according to a preferable aspect of the present invention, the left securing portion and the right securing portion are disposed rearward of a front end of the headlight.

In the saddle-ride type vehicle of the present invention, the left securing portion and the right securing portion are disposed below the center of the light-emitting element.

The saddle-ride type vehicle of the present invention further comprises a first securing member for securing the left securing portion, and a second securing member for securing the right securing portion. Each of the left securing portion and the right securing portion includes a through-hole. The first securing member is inserted into the through-hole of the left securing portion from the outside. The second securing member is inserted into the through-hole of the right securing portion from the outside.

The saddle-ride type vehicle of the present invention further comprises a front wheel, a first support member, a second support member, a steering shaft, a bracket, and a steering shaft. The first support member and the second support member are aligned in the vehicle width direction, and adapted for rotatably supporting the front wheel. The steering shaft is inserted into the head pipe. The bracket connects upper ends of the first support member and the second support member and a lower end of the steering shaft. The bracket supports the first support member and the second support member. The steering shaft extends from the bracket. The left securing portion and the right securing portion are disposed above an upper end of the bracket.

A saddle-ride type vehicle according to a preferable aspect of the present invention further comprises a coupling portion. The coupling portion couples the left securing portion and the right securing portion, the coupling portion extending in the vehicle width direction.

A saddle-ride type vehicle according to a further preferable aspect of the present invention further comprises a handlebar and a flasher secured to the handle bar.

In the saddle-ride type vehicle according to the present invention, the left securing portion of the support stay is disposed farther to the left than the left end of the head pipe. The right securing portion of the support stay is disposed farther to the right than the right end of the head pipe. A large distance is thus secured between the left and right securing portions. Bending of the front cover can thereby be suppressed compared to if the securing portion were disposed in the center of the front cover.

In the saddle-ride type vehicle according to the present invention, the left securing portion is positioned farther to the left than the left end of the reflector. The right securing portion is positioned farther to the right than the right end of the reflector. The distance between the left securing portion and the right securing portion is thus increased further. The larger the headlight, the greater the distance between the left securing portion and the right securing portion is. Bending of the front cover can thereby be suppressed further.

In the saddle-ride type vehicle according to a preferable aspect of the present invention, the left securing portion and the right securing portion are disposed rearward of the front end of the headlight. This makes it easy to secure a large interval between the left securing portion and the right securing portion.

In the saddle-ride type vehicle according to the present invention, the left securing portion and right securing portion are disposed below the center of the light-emitting element. This allows for improved freedom in the layout of the left securing portion and the right securing portion without interference from the light-emitting element.

In the saddle-ride type vehicle according to the present invention, the first securing member is inserted into the through-hole of the left securing portion from the outside. The second securing member is inserted into the through-hole of the right securing portion from the outside. This makes it easier to mount the front cover.

In the saddle-ride type vehicle according to the present invention, the left securing portion and the right securing portion are disposed above the upper end of the bracket. Interference of the left securing portion and the right securing portion with the bracket is thereby inhibited, even if the bracket moves during steering. This makes it easy to secure a large steering angle.

In the saddle-ride type vehicle according to a preferable aspect of the present invention, the left securing portion and the right securing portion are coupled by the coupling portion extending in the vehicle width direction. This allows the front cover to be firmly supported. Bending of the front cover can also be even further suppressed thereby.

In the saddle-ride type vehicle according to a further preferable aspect of the present invention, the flasher is secured on the handle bar. In other words, the flasher is not supported by the front cover. The weight of the front portion is thus reduced. This allows the front portion to be more firmly attached to the vehicle body frame.
FIG. 1 is a left side view of a saddle-ride type vehicle according to an embodiment of the present invention;
FIG. 2 is a front view of the saddle-ride type vehicle;
FIG. 3 is a plan view of the saddle-ride type vehicle;
FIG. 4 is a left side view of a portion of a front cover;
FIG. 5 is a perspective view of the structure of the interior of the front cover; and
FIG. 6 is a cross-sectional view along IV-IV in FIG. 4.

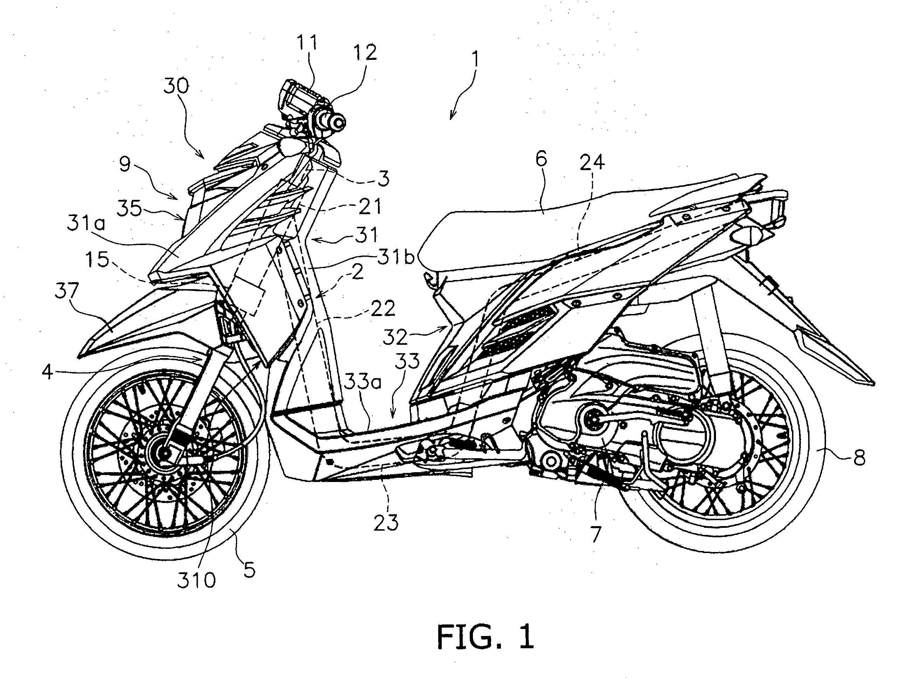

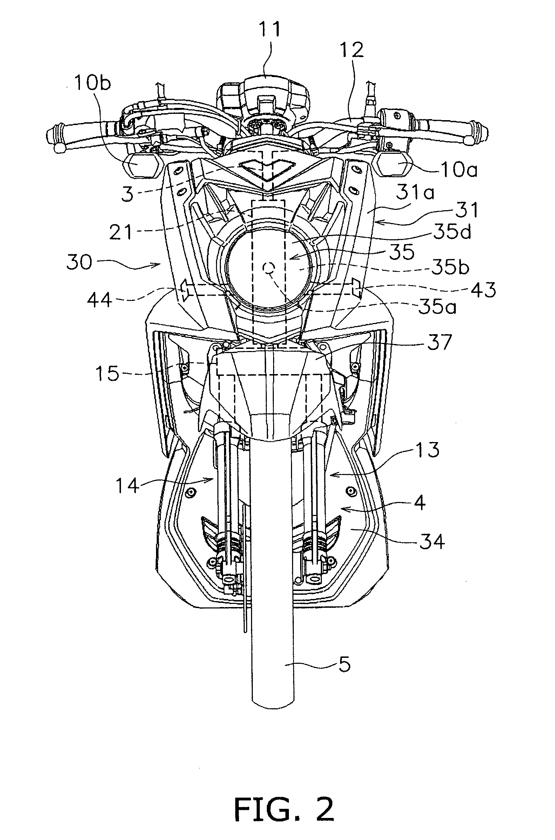

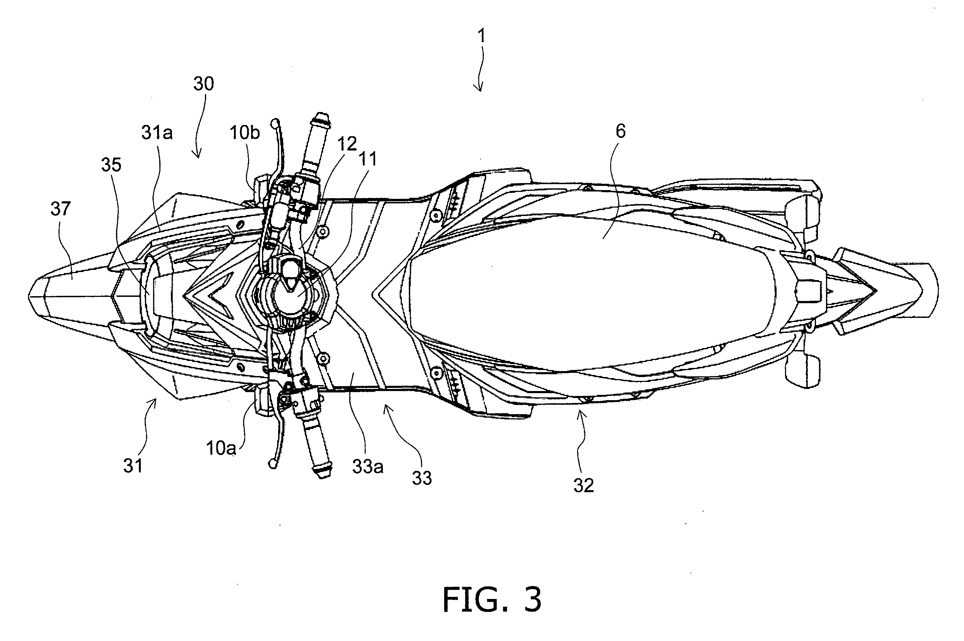

There follows a description of a saddle-ride type vehicle according to an embodiment of the present invention with reference to the drawings. FIG. 1 is a left side view of a saddle-ride type vehicle 1 according to an embodiment of the present embodiment. FIG. 2 is a front view of the saddle-ride type vehicle 1. FIG. 3 is a plan view of the saddle-ride type vehicle. A saddle-ride type vehicle 1 is a scooter-type two-wheeled vehicle. As shown in FIG. 1, the saddle-ride type vehicle 1 includes a vehicle body frame 2, a steering shaft 3, a front fork 4, a front wheel 5, a seat 6, an engine unit 7, a rear wheel 8, and a vehicle body cover 9. In the following description, "front-back direction" refers to the front-back direction of the vehicle body from the perspective of a rider seated on the seat 6. "Left-right direction" refers to the left-right direction of the vehicle body from the perspective of a rider seated on the seat 6.

The vehicle body frame 2, for example, is formed from iron pipes. The vehicle body frame 2 includes a head pipe 21, a down frame 22, an underframe 23, and a rear frame 24. The vehicle body frame 2 may be formed as a single piece by bending, or constituted by a plurality of portions joined into a whole via welding or the like. The head pipe 21 is positioned in the center of the vehicle with respect to the vehicle width direction. The steering shaft 3 is rotatably inserted into the head pipe 21. A handlebar 12 is coupled to an upper portion of the steering shaft 3. As shown in FIG. 2, right and left flashers 10a and 10b and a speedometer unit 11 for displaying vehicle speed are attached to the handlebar 12. The front fork 4 is coupled to a lower portion of the steering shaft 3.

The down frame 22 is connected to the head pipe 21. The down frame 22 extends downward from the head pipe 21. The underframe 23 is connected to a lower end of the down frame 22. The underframe 23 extends rearward from the down frame 22. The rear frame 24 is connected to a rear end of the underframe 23. The rear frame 24 extends rearward and upward from a rear end of the underframe 23. The seat 6 is disposed above the rear frame 24. The seat 6 is disposed rearward of the head pipe 21. The seat 6 is supported by the vehicle body frame 2. Specifically, the seat 6 is attached to the rear frame 24.

The engine unit 7 is pivotably attached to the vehicle body frame 2 by a bracket not shown in the drawings. The engine unit 7 includes an output shaft not shown in the drawings. The output shaft rotatably supports the rear wheel 8.

The front fork 4 rotatably supports the front wheel 5. The front fork 4 is an example of the support member of the present invention. As shown in FIG. 2, the front fork 4 includes a first support member 13, a second support member 14, and a bracket 15. The first support member 13 and the second support member 14 are aligned in the vehicle width direction.

The bracket 15 supports the first support member 13 and the second support member 14. The bracket 15 is connected to the steering shaft 3. Specifically, the lower end of the steering shaft 3 is connected to the bracket 15. The upper end of the first support member 13 and the upper end of the second support member 14 are connected to the bracket 15. The steering shaft 3 extends upward from the bracket 15.

As shown in FIG. 1, the vehicle body cover 9 includes a front portion 30, a side cover 32, and an under cover 33. The vehicle body cover 9 is made of resin. The front portion 30 includes a front cover 31 and a headlight 35. The front cover 31 primarily covers the vicinity of the head pipe 21 and the down frame 22. The front cover 31 includes a front surface 31a and a rear surface 31b. The headlight 35 is attached to the front surface 31a of the front cover 31.

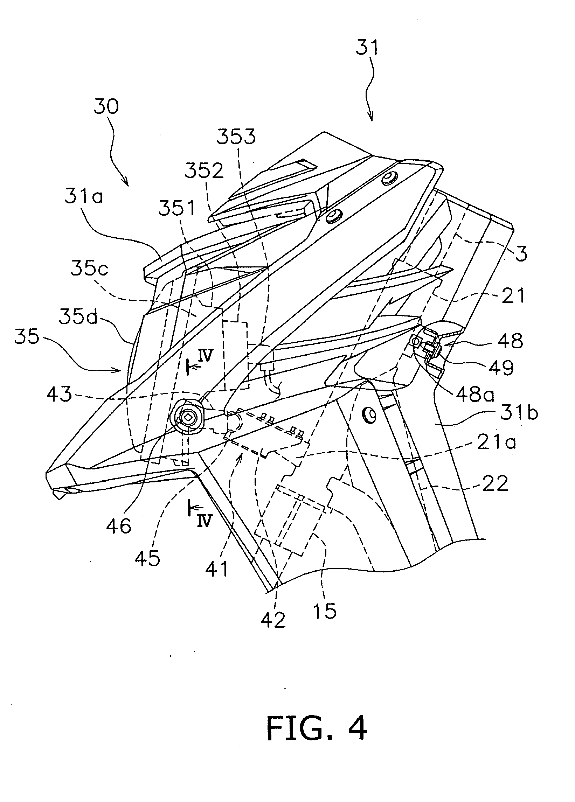

As shown in FIG. 2, the headlight 35 includes a headlight bulb 35a as a light-emitting element, a reflector 35b, and a lens member 35d. FIG. 4 is a left side view of a portion of a front cover 31. As shown in FIG. 4, the headlight 35 includes a casing 35c. The reflector 35b includes a rearward-bending shape, and reflects light emitted by the headlight bulb 35a forwards. The casing 35c is disposed rearward of the headlight bulb 35a. The front surface of the casing 35c forms an opening, and a reflector 35d is disposed inside the casing 35c. The casing 35c includes a casing front section 351 and a casing rear section 352. The lens member 35d is attached to the casing front section 351. The casing rear section 352 projects rearward from the casing front section 351. The bottom portion of the casing rear section 352 is disposed further upward than the bottom portion of the casing front section 351. A socket 353 is attached to the rear surface of the casing rear section 352. The lens member 35d is made of a translucent material. The lens member 35d is disposed forward of the headlight bulb 35a, the reflector 35b, and the casing 35c.

The front surface 31a covers the head pipe 21 and the down frame 22 from the front. The front surface 31a includes a concavity 310 depressed rearward as seen from the side of the vehicle. As shown in FIG. 1, an inner fender 34 is disposed in the concavity 310. The front wheel 5 is disposed forward of the inner fender 34. The front fender 37 is disposed above the front wheel 5. The rear section of the front fender 37 is disposed in the concavity 310. As shown in FIG. 3, the dimensions of the front surface 31a with respect to the vehicle width direction increase towards the rear as seen in plan view. The rear surface 31b covers the head pipe 21 and the down frame 22 from the rear.

As shown in FIG. 1, the side cover 32 is disposed below the seat 6. The side cover 32 covers the front and both sides of the rear frame 24, which is disposed below the seat 6. The under cover 33 is disposed between the front cover 31 and the side cover 32 in the front-back direction. The under cover 33 couples the front cover 31 and the side cover 32. The under cover 33 includes a foot board 33a. The foot board 33a is positioned between the front wheel 5 and the seat 6 in the front-back direction. The foot board 33a is positioned below the seat 6. The foot board 33a is a surface on which the feet of a rider seated on the seat 6 are placed while driving. The foot board 33a is positioned above the underframe 23. The foot board 33a is disposed between the down frame 22 and the rear frame 24 in the front-back direction. The foot board 33a is formed so as to be flat across the vehicle width direction. "The foot board 33a is...flat" means that the foot board 33a is flat enough that the feet of the rider can be placed anywhere on the footrest portion. In other words, anti-slippage ridges or the like can be formed in the foot board 33a.

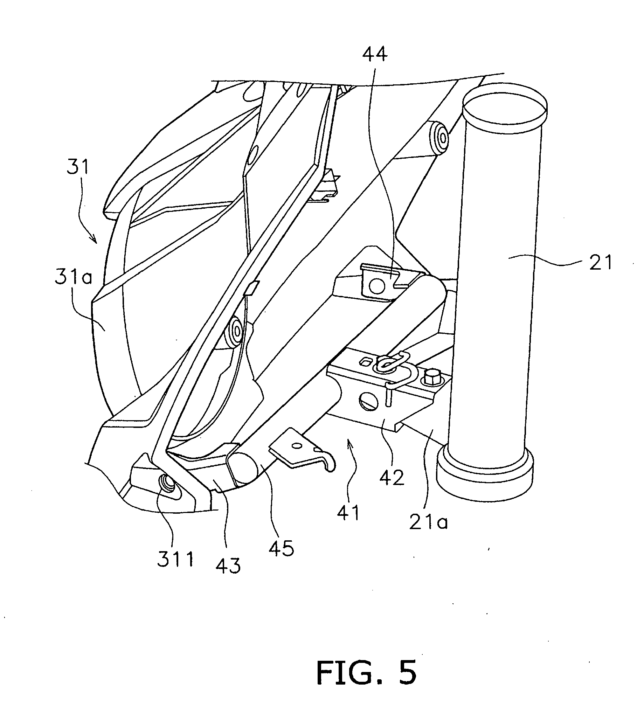

FIG. 5 is a perspective view of the structure of the interior of the front cover 31. As shown in FIG. 4 and FIG. 5, the saddle-ride type vehicle 1 includes a support stay 41. The support stay 41 supports the front portion 30. The support stay 41 includes a frame securing portion 42, a left securing portion 43, a right securing portion 44, and a coupling portion 45. The frame securing portion 42 is secured to the vehicle body frame 2. Specifically, the frame securing portion 42 is secured to the head pipe 21. The frame securing portion 42 includes a shape extending in the front-back direction. More specifically, the frame securing portion 42 includes a shape extending diagonally forward and upward from the head pipe 21. The frame securing portion 42 includes a boxlike shape with an opening in the rear surface. The head pipe 21 includes a forward-projecting projection 21a. The projection 21a is inserted into the interior of the frame securing portion 42 through an opening in the frame securing portion 42, and is secured to the frame securing portion 42 by a securing member such as a bolt.

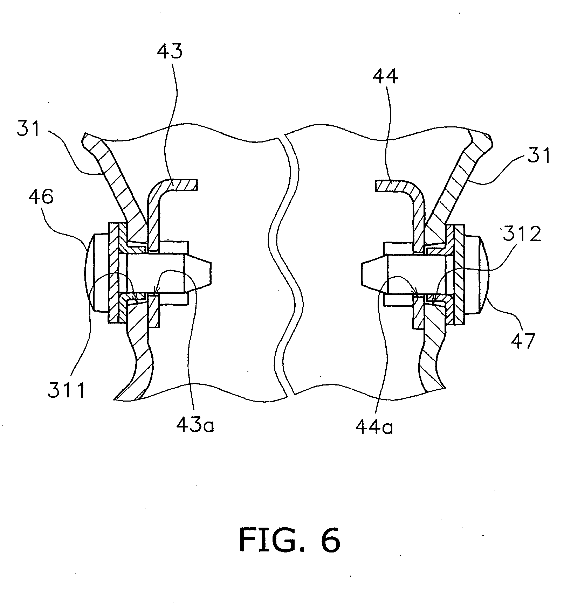

The left securing portion 43 is secured to the front cover 31. Specifically, the left securing portion 43 is secured to a left surface of the front cover 31. The left securing portion 43 includes a bent plate-like shape. The left securing portion 43 is disposed so as to extend in the front-back direction. As shown in FIG. 4, the left securing portion 43 is disposed rearward of the front end of the headlight 35. The left securing portion 43 is disposed so as to overlap at least a portion of the headlight 35 as viewed from the side. The left securing portion 43 is positioned forward of the head pipe 21. The left securing portion 43 is positioned below the upper end of the head pipe 21. The left securing portion 43 is positioned above the lower end of the head pipe 21. The left securing portion 43 is positioned above the upper end of the bracket 15. The left securing portion 43 is disposed forward of the bracket 15. As shown in FIG. 2, the left securing portion 43 is disposed farther to the left than the left end of the head pipe 21. The left securing portion 43 is positioned farther to the left than the left end of the reflector 35b. The left securing portion 43 is disposed below the center of the headlight bulb 35a. FIG. 6 is a cross-sectional view along IV-IV in FIG. 4. As shown in FIG. 6, the left securing portion 43 includes a through-hole 43a. The through-hole 43a passes through the left securing portion 43 in the vehicle width direction. A first securing member 46 is inserted into the through-hole 43a of the left securing portion 43. A through-hole 311 is formed on the front cover 31 at a position facing the through-hole 43a of the left securing portion 43. The first securing member 46 is inserted into the through-hole 43a of the left securing portion 43 and the through-hole 311 of the front cover 31. The first securing member 46 is, for example, a screw. The first securing member 46 mounts the left securing portion 43 to the front cover 31. The first securing member 46 is inserted into the through-hole 43a of the left securing portion 43 and the through-hole 311 of the front cover 31 from the left.

The right securing portion 44 is disposed symmetrically to the left securing portion 43 with respect to the left-right direction. In other words, the right securing portion 44 is secured to the front cover 31. Specifically, the right securing portion 44 is secured to the right surface of the front cover 31. The right securing portion 44 includes a bent plate-like shape. The right securing portion 44 is disposed so as to extend in the front-back direction. The right securing portion 44 is disposed rearward of the front end of the headlight 35. The right securing portion 44 is disposed so as to overlap at least a portion of the headlight 35 as viewed from the side. The right securing portion 44 is positioned forward of the head pipe 21. The right securing portion 44 is positioned below the upper end of the head pipe 21. The right securing portion 44 is positioned above the lower end of the head pipe 21. The right securing portion 44 is positioned above the upper end of the bracket 15. The right securing portion 44 is disposed forward of the bracket 15. As shown in FIG. 2, the right securing portion 44 is disposed farther to the right than the right end of the head pipe 21. The right securing portion 44 is positioned farther to the right than the right end of the reflector 35b. The right securing portion 44 is disposed below the center of the headlight bulb 35a. As shown in FIG. 6, the right securing portion 44 includes a through-hole 44a. The through-hole 44a passes through the right securing portion 44 in the vehicle width direction. A second securing member 47 is inserted into the through-hole 44a of the right securing portion 44. A through-hole 312 is formed on the front cover 31 at a position facing the through-hole 44a of the right securing portion 44. The second securing member 47 is inserted into the through-hole 44a of the right securing portion 44 and the through-hole 312 of the front cover 31. The second securing member 47 is, for example, a screw. The second securing member 47 mounts the right securing portion 44 to the front cover 31. The second securing member 47 is inserted into the through-hole 44a of the right securing portion 44 and the through-hole 312 of the front cover 31 from the right.

As shown in FIG. 5, the coupling portion 45 couples the left securing portion 43 and the right securing portion 44. The coupling portion 45 disposed rearward of the left securing portion 43 and the right securing portion 44. The left end of the coupling portion 45 is connected to the rear end of the left securing portion 43. The right end of the coupling portion 45 is connected to the rear end of the right securing portion 44. The coupling portion 45 includes a pipe-like shape. The coupling portion 45 is disposed so as to extend in the vehicle width direction. The coupling portion 45 is connected to the frame securing portion 42. Specifically, the center of the coupling portion 45 in the vehicle width direction is connected to the front end of the frame securing portion 42. The coupling portion 45 is positioned below the casing 35c of the headlight 35. More specifically, the coupling portion 45 is positioned below the casing rear section 352. The coupling portion 45 is positioned above the bottom of the casing front section 351. The coupling portion 45 is positioned below the bottom of the casing rear section 352. The coupling portion 45 is positioned forward of the rear surface of the casing rear section 352.

As shown in FIG. 4, the rear surface 31b of the front cover 31 is secured to the head pipe 21 at a rear securing portion 48. The rear securing portion 48 is positioned rearward of the head pipe 21. The rear securing portion 48 is positioned above the left securing portion 43 and the right securing portion 44. The rear securing portion 48 includes a through-hole 48a. A third securing member 49 is inserted into the through-hole 48a. The third securing member 49 is, for example, a screw. The third securing member 49 mounts the rear securing portion 48 to the head pipe 21.

The saddle-ride type vehicle 1 according to the present embodiment has the following features.

The left securing portion 43 of the support stay 41 is disposed farther to the left than the left end of the head pipe 21. The right securing portion 44 of the support stay 41 is disposed farther to the right than the right end of the head pipe 21. The left securing portion 43 is positioned farther to the left than the left end of the reflector 35b. The right securing portion 44 is positioned farther to the right than the right end of the reflector 35b. Thus, the larger the headlight 35, the greater the interval between the left securing portion 43 and the right securing portion 44. Bending of the front cover can thus be suppressed compared to if the securing portion were disposed in the center of the front cover 31.

The left securing portion 43 and the right securing portion 44 are disposed rearward of the front end of the headlight 35. This makes it easy to secure a large interval between the left securing portion 43 and the right securing portion 44. The left securing portion 43 and the right securing portion 44 are disposed below the center of the headlight bulb 35a. This allows for improved freedom in the layout of the left securing portion 43 and the right securing portion 44 without interference from the headlight bulb 35a.

The first securing member 46 is inserted into the through-hole 43a of the left securing portion 43 from the left. The second securing member 47 is inserted into the through-hole 44a of the right securing portion 44 from the right. It is thus possible for a worker to easily insert the first securing member 46 into the through-hole 43a of the left securing portion 43 from the left side of the front cover 31. It is also possible for a worker to easily insert the second securing member 47 into the through-hole 44a of the right securing portion 44 from the right side of the front cover 31. This facilitates securing of the front cover 31.

The left securing portion 43 and the right securing portion 44 are positioned above the upper end of the bracket 15. Interference of the left securing portion 43 and the right securing portion 44 with the bracket 15 is thereby inhibited, even if the bracket 15 moves during steering. This makes it easy to secure a large steering angle.

The left securing portion 43 and the right securing portion 44 are coupled by the coupling portion 45 extending in the vehicle width direction. This allows the front cover 31 to be firmly supported. Bending of the front cover 31 can also be suppressed even further thereby.

The flashers 10a and 10b are secured upon the handlebar 12. In other words, the flashers 10a and 10b are not supported by the front cover. The weight of the front portion 30 is thus reduced. This allows the front portion 30 to be more firmly attached to the vehicle body frame 2.

An embodiment of the present invention has been described above, but the present invention is not limited to this embodiment, and various modifications are possible to the extent that they remain within the scope of the invention defined by the claims.

Saddle-ride type vehicle are not limited to two-wheeled vehicles, but also encompass three-wheeled vehicles. Two-wheeled vehicles are not limited to scooters, but also encompass mopeds and sport bikes.

In the above embodiment, the support stay 41 is a separate member from the headlight 35, but may also form a single piece with the headlight 35. For example, the frame securing portion 42 may be disposed so as to project rearward from the casing 35c of the headlight 35. Alternatively, the left securing portion 43 and the right securing portion 44 may be disposed so as to project to the left and right, respectively, from the casing 35c of the headlight 35. In such cases, the coupling portion 45 may be omitted.

In the above embodiment, the left securing portion 43 is positioned farther to the left than the left end of the reflector 35b, and the right securing portion 44 is positioned farther to the right than the right end of the reflector 35b, in order to broaden the interval between the left and right securing portions 43 and 44.

In the above embodiment, the left securing portion 43 and the right securing portion 44 are disposed rearward of the front end of the headlight 35, but the left securing portion 43 and the right securing portion 44 are not limited to this configuration. For example, the left securing portion 43 and the right securing portion 44 may be disposed forward of the front end of the headlight 35. However, in order to broaden the interval between the left and right securing portions 43 and 44, the configuration as in the above embodiment is preferable.

In the above embodiment, the left securing portion 43 and the right securing portion 44 are disposed below the center of the headlight bulb 35a, in order to improve the freedom of the layout of the left securing portion 43 and the right securing portion 44.

In the above embodiment, the first securing member 46 is inserted into the through-hole 43a of the left securing portion 43 from the left, and the second securing member 47 is inserted into the through-hole 44a of the right securing portion 44 from the right, in order to facilitate the operation of securing the front cover 31.

In the above embodiment, the flashers 10a and 10b are secured to the handlebar 12, but the flashers 10a and 10b are not limited to these securing positions. For example, the flashers 10a and 10b may be secured to the front cover 31. However, in order to reduce the weight of the front portion 30, the flashers 10a and 10b are preferably secured to the handlebar 12 rather than the front cover 31.

In the above embodiment, the first securing member 46 is inserted into the through-hole 43a of the left securing portion 43 from the left. The second securing member 47 is inserted into the through-hole 44a of the right securing portion 44 from the right.

## Claims

1. A saddle-ride type vehicle (1) comprising:
a vehicle body frame (2) including a head pipe (21);
a front portion (30) including a headlight (35), and a front cover (31) to which the headlight (35) is attached, the front cover (31) adapted for covering the front of the head pipe (21);
a front wheel (5);
a first support member (13) and a second support member (14), aligned in the vehicle width direction, and adapted for rotatably supporting the front wheel (5);
a steering shaft (3) inserted into the head pipe (21);
a bracket (15) for connecting upper ends of the first support member (13) and the second support member (14) and a lower end of the steering shaft, and supporting the first support member (13) and the second support member (14);
the steering shaft (3) extending from the bracket (15); and
a support stay (41) for supporting the front portion (30);
wherein the support stay (41) includes a left securing portion (43) disposed farther to the left than a left end of the head pipe (21) and secured to the front cover (31), a right securing portion (44) disposed farther to the right than a right end of the head pipe (21) and secured to the front cover (31), and a frame securing portion (42) secured to the vehicle body frame (2);
wherein the left securing portion (43) and the right securing portion (44) are disposed above an upper end of the bracket (15);
wherein the headlight (35) includes a light-emitting element (35a) and a reflector (35b) for reflecting light emitted by the light-emitting element (35a) forward;
wherein the left securing portion (43) is positioned farther to the left than a left end of the reflector (35b); the right securing portion (44) is positioned farther to the right than a right end of the reflector (35b); and the left securing portion (43) and the right securing portion (44) are disposed below the center of the light-emitting element (35a); and
the saddle-ride type vehicle (1) further comprising a first securing member (46) for securing the left securing portion (43); and a second securing member (47) for securing the right securing portion (44); wherein each of the left securing portion (43) and the right securing portion (44) includes a through-hole (43a, 44a);
**characterized in that**
the through-hole (43a) of the left securing portion (43) passes through the left securing portion (43) in the vehicle width direction, and a through-hole (311) is formed on the front cover (31) at a position facing the through-hole (43a) of the left securing portion (43);
the first securing member (46) is inserted into the through-hole (43a) of the left securing portion (43) and the through-hole (311) of the front cover (31) from the outside of the front cover (31) from the left; and
the through-hole (44a) of the right securing portion (44) passes through the right securing portion (44) in the vehicle width direction, and a through-hole (312) is formed on the front cover (31) at a position facing the through-hole (44a) of the right securing portion (44);
the second securing member (47) is inserted into the through-hole (44a) of the right securing portion (44) and the through-hole (312) of the front cover (31) from the outside of the front cover (31) from the right.

2. The saddle-ride type vehicle (1) according to claim 1;
wherein the left securing portion (43) and the right securing portion (44) are disposed rearward of a front end of the headlight (35).

3. The saddle-ride type vehicle(1) according to claim 1 or 2, wherein the support stay (41) includes a coupling portion (45) for coupling the left securing portion (43) and the right securing portion (44), the coupling portion (45) extending in the vehicle width direction.

4. The saddle-ride type vehicle (1) according to any one of claims 1 to 3, further comprising:
a handlebar(12); and
a flasher (10a, 10b) secured to the handlebar (12).

## Patentansprüche

1. Sattelfahrzeug (1), umfassend:
einen Fahrzeugrahmen (2) mit einem Kopfrohr (21);
einen vorderen Teil (30) mit einem Scheinwerfer (35) und einer Frontabdeckung (31), an welcher der Scheinwerfer (35) befestigt ist, wobei die Frontabdeckung (31) dazu eingerichtet ist, die Vorderseite des Kopfrohrs (21) abzudecken;
ein Vorderrad (5);
ein erstes Aufhängungselement (13) und ein zweites Aufhängungselement (14), die in der Fahrzeug-Breitenrichtung ausgerichtet und dazu eingerichtet sind, das Vorderrad (5) drehfähig aufzuhängen;
eine Lenkwelle (3), die in das Kopfrohr (21) eingesetzt ist;
eine Halterung (15) zum Verbinden oberer Enden des ersten Aufhängungselements (13) und des zweiten Aufhängungselements (14) und eines unteren Endes der Lenkwelle, und zum Tragen des ersten Aufhängungselements (13) und des zweiten Aufhängungselements (14);
wobei sich die Lenkwelle (13) von der Halterung (15) erstreckt; und
einen Träger (41) zum Tragen des vorderen Teils (30);
wobei der Träger (41) einen linken Befestigungsteil (43) aufweist, der weiter links als ein linkes Ende des Kopfrohrs (21) angeordnet und an der Frontabdeckung (31) befestigt ist, einen rechten Befestigungsteil (44), der weiter rechts als ein rechtes Ende des Kopfrohrs (21) angeordnet und an der Frontabdeckung (31) befestigt ist, und einen Rahmenbefestigungsteil (42), der an dem Fahrzeugrahmen (2) befestigt ist;
wobei der linke Befestigungsteil (43) und der rechte Befestigungsteil (44) über einem oberen Ende der Halterung (15) angeordnet sind;
wobei der Scheinwerfer (35) ein lichtemittierendes Element (35a) und einen Reflektor (35b) aufweist, um das von dem lichtemittierenden Element (35a) emittierte Licht nach vorne zu reflektieren;
wobei der linke Befestigungsteil (43) weiter links als ein linkes Ende des Reflektors (35b) befestigt ist; der rechte Befestigungsteil (44) weiter rechts als ein rechtes Ende des Reflektors (35b) befestigt ist; und der linke Befestigungsteil (43) und der rechte Befestigungsteil (44) unter der Mitte des lichtemittierenden Elements (35a) angeordnet sind; und
das Sattelfahrzeug (1) des Weiteren ein erstes Befestigungselement (46) zum Befestigen des linken Befestigungsteils (43) umfasst; und ein zweites Befestigungselement (47) zum Befestigen des rechten Befestigungsteils (44); wobei sowohl der linke Befestigungsteil (43) als auch der rechte Befestigungsteil (44) jeweils eine Durchgangsbohrung (43a, 44a) aufweisen;
**dadurch gekennzeichnet, dass**
die Durchgangsbohrung (43a) des linken Befestigungsteils (43) in der Fahrzeug-Breitenrichtung durch den linken Befestigungsteil (43) verläuft, und eine Durchgangsbohrung (311) auf der Frontabdeckung (31) an einer Position gegenüber der Durchgangsbohrung (43a) des linken Befestigungsteils (43) ausgebildet ist;
das erste Befestigungselement (46) von der Außenseite der Frontabdeckung (31) von links in die Durchgangsbohrung (43a) des linken Befestigungsteils (43) und die Durchgangsbohrung (311) der Frontabdeckung (31) eingesetzt wird; und
die Durchgangsbohrung (44a) des rechten Befestigungsteils (44) in der Fahrzeug-Breitenrichtung durch den rechten Befestigungsteil (44) verläuft, und eine Durchgangsbohrung (312) auf der Frontabdeckung (31) an einer Position gegenüber der Durchgangsbohrung (44a) des rechten Befestigungsteils (44) ausgebildet ist;
das zweite Befestigungselement (47) von der Außenseite der Frontabdeckung (31) von rechts in die Durchgangsbohrung (44a) des rechten Befestigungsteils (44) und die Durchgangsbohrung (312) der Frontabdeckung (31) eingesetzt wird.

2. Sattelfahrzeug (1) nach Anspruch 1,
wobei der linke Befestigungsteil (43) und der rechte Befestigungsteil (44) auf der Rückseite eines vorderen Endes des Scheinwerfers (35) angeordnet sind.

3. Sattelfahrzeug (1) nach Anspruch 1 oder 2, wobei der Träger (41) einen Verbindungsteil (45) aufweist, um den linken Befestigungsteil (43) und der rechten Befestigungsteil (44) zu verbinden, wobei sich der Verbindungsteil (45) in der Fahrzeug-Breitenrichtung erstreckt.

4. Sattelfahrzeug (1) nach einem der Ansprüche 1 bis 3, des Weiteren umfassend
eine Lenkstange (12); und
eine Blinkleuchte (10a, 10b), die an der Lenkstange (12) befestigt ist.

## Revendications

1. Véhicule de type monté à califourchon (1), comprenant :
- un cadre de corps de véhicule (2) incluant un tube de tête (21) ;
- une partie avant (30) incluant un phare avant (35) et une couverture avant (31) à laquelle le phare avant (35) est fixé, la couverture avant (31) étant adaptée à couvrir l'avant du tube de tête (21) ;
- une roue avant (5) ;
- un premier élément de support (13) et un second élément de support (14) alignés dans la direction d'une largeur du véhicule et adaptés à supporter de façon rotative la roue avant (5) ;
- un arbre de direction (3) inséré dans le tube de tête (21) ;
- un support (15) pour relier des extrémités supérieures du premier élément de support (13) et du second élément de support (14) et une extrémité inférieure de l'arbre de direction et supporter le premier élément de support (13) et le second élément de support (14) ;
- l'arbre de direction (3) s'étendant à partir du support (15) ; et
- un étai de support (41) pour supporter la partie avant (30) ;
- dans lequel l'étai de support (41) inclut une partie gauche de fixation (43) disposée plus loin vers la gauche qu'une extrémité gauche du tube de tête (21) et fixée à la couverture avant (31), une partie droite de fixation (44) disposée plus loin vers la droite qu'une extrémité droite du tube de tête (21) et fixée à la couverture avant (31), ainsi qu'une partie de fixation de cadre (42) fixée au cadre de corps de véhicule (2) ;
- dans lequel la partie gauche de fixation (43) et la partie droite de fixation (44) sont disposées au-dessus d'une extrémité supérieure du support (15) ;
- dans lequel le phare avant (35) inclut un élément émetteur de lumière (35a) et un réflecteur (35b) pour réfléchir la lumière émise par l'élément émetteur de lumière (35a) vers l'avant ;
- dans lequel la partie gauche de fixation (43) est positionnée plus loin vers la gauche qu'une extrémité gauche du réflecteur (35b) ; la partie droite de fixation (44) est positionnée plus loin vers la droite qu'une extrémité droite du réflecteur (35b) ; et la partie gauche de fixation (43) et la partie droite de fixation (44) sont disposées au-dessous du centre de l'élément émetteur de lumière (35a) ; et
- le véhicule de type monté à califourchon (1) comprenant en outre un premier élément de fixation (46) pour fixer la partie gauche de fixation (43) ; et un second élément de fixation (47) pour fixer la partie droite de fixation (44) ; dans lequel chacune de la partie gauche de fixation (43) et de la partie droite de fixation (44) inclut un trou traversant (43a, 44a) ;
- **caractérisé en ce que** :
- le trou traversant (43a) de la partie gauche de fixation (43) traverse la partie gauche de fixation (43) dans la direction d'une largeur du véhicule et un trou traversant (311) est ménagé sur la couverture avant (31) en une position faisant face au trou traversant (43a) de la partie gauche de fixation (43) ;
- le premier élément de fixation (46) est inséré dans le trou traversant (43a) de la partie gauche de fixation (43) et le trou traversant (311) de la couverture avant (31) depuis l'extérieur de la couverture avant (31) depuis la gauche ; et
- le trou traversant (44a) de la partie droite de fixation (44) traverse la partie droite de fixation (44) dans la direction d'une largeur du véhicule et un trou traversant (312) est ménagé sur la couverture avant (31) en une position faisant face au trou traversant (44a) de la partie droite de fixation (44) ;
- le second élément de fixation (47) est inséré dans le trou traversant (44a) de la partie droite de fixation (44) et le trou traversant (312) de la couverture avant (31) depuis l'extérieur de la couverture avant (31) depuis la droite.

2. Véhicule de type monté à califourchon (1) selon la revendication 1 :
- dans lequel la partie gauche de fixation (43) et la partie droite de fixation (44) sont disposées en arrière d'une extrémité avant du phare avant (35).

3. Véhicule de type monté à califourchon (1) selon les revendications 1 ou 2 :
- dans lequel l'étai de support (41) inclut une partie de couplage (45) pour coupler la partie gauche de fixation (43) et la partie droite de fixation (44), la partie de couplage (45) s'étendant dans la direction d'une largeur du véhicule.

4. Véhicule de type monté à califourchon (1) selon l'une quelconque des revendications 1 à 3, comprenant en outre :
- un guidon (12) ; et
- un dispositif de clignotement (10a, 10b) fixé au guidon (12).
